# DEMANDE DE BREVET EUROPEEN

(11) **EP 1 302 822 A1**
(43) Date de publication de la demande: **16.04.2003**
(21) Numéro de dépôt: 01203886.5
(22) Date de dépôt: 15.10.2001
(51) Int. Cl.: G04C 10/00, H02J 7/02, G04G 1/00

(54) **Chargeur électrique pour objet portatif tel que, notamment, une pièce d'horlogerie du type montre-bracelet**

(71) Demandeur: The Swatch Group Management Services AG, 2501 Biel (CH)
(72) Inventeur: Kinkio, Stéphane, 2000 Neuchâtel (CH); Kaltenrieder, Cédric, 2610 St-Imier (CH)
(74) Mandataire: Thérond, Gérard Raymond

(57) **Abrégé**

La présente invention concerne un support pour un objet portatif électronique tel que, par exemple, une montre-bracelet (10), alimenté par au moins un accumulateur rechargeable et susceptible de communiquer avec une unité de traitement électronique distante, ce support (1) étant caractérisé en ce qu'il comprend des premiers moyens permettant de recharger le ou les accumulateurs de l'objet portatif, et des seconds moyens qui permettent audit objet portatif d'échanger des informations de façon uni- ou bidirectionnelle avec une unité de traitement électronique distante alors même que ledit objet portatif est susceptible d'être en cours de chargement.

## Description

La présente invention concerne un dispositif pour recharger le ou les accumulateurs d'un objet portatif tel que, notamment, une pièce d'horlogerie du type montre-bracelet.

Il apparaît actuellement sur le marché des pièces d'horlogerie multifonctions du type montre-bracelet telles que des montres agenda, des montres téléphone, des montres GPS ou autres qui sont de plus en plus complexes. Ces montres multifonctions permettent en effet à leurs porteurs d'accéder, non seulement à diverses informations horaires, mais également à une multiplicité d'applications de type informatique qui peuvent, selon les cas, être stockées dans la montre, dans un ordinateur personnel (mieux connu sous sa dénomination anglo-saxonne "Personal Computer" ou "PC") ou bien être accessibles via Internet.

Outre le grand nombre de fonctions qu'elles sont capables de remplir, les montres du genre susmentionné présentent la particularité d'être, le plus souvent, fortes consommatrices d'énergie. C'est pourquoi elles sont le plus souvent alimentées, non pas par des piles jetables dont les capacités de stockage en énergie sont limitées, mais par des accumulateurs qui peuvent être périodiquement rechargés au moyen de chargeurs électriques prévus à cet effet.

Néanmoins, pendant toute la durée de la charge des accumulateurs de la montre, celle-ci ne peut être utilisée à d'autres fins, ce qui constitue un inconvénient notable lorsque, par exemple, à la fin d'une journée de travail, un utilisateur désireux d'introduire dans son PC les différents rendez-vous qu'il a mémorisés dans sa montre agenda, en est empêché par le fait que le niveau de charge des accumulateurs étant trop faible, la communication avec le PC ne peut être établie, et que la montre doit être rechargée préalablement à toute autre opération.

Pour remédier aux inconvénients décrits ci-dessus, il a déjà été proposé des dispositifs de charge électrique permettant la recharge des accumulateurs d'un objet portatif et l'échange simultané de données entre un ordinateur et ledit objet à recharger. Un dispositif de ce genre a, par exemple, été décrit dans la demande de brevet NL 9000685 au nom de la société N.V. Nederlansche Apparatenfabriek. Ce dispositif comprend une unité portative de communication et de traitement pouvant être placée sur une unité fixe de façon à recharger les batteries et transférer des données à l'aide de moyens inductifs communs. Plus précisément, l'unité de communication et de transmission de données est alimentée par des accumulateurs rechargeables. L'énergie nécessaire à la charge est transmise de manière inductive par un dispositif de charge via le primaire d'un transformateur. Un stabilisateur permet de limiter la tension de charge délivrée par le secondaire du transformateur, cette tension étant préalablement redressée au moyen de diodes et d'un condensateur. Un oscillateur permet de moduler le signal de charge en fonction des données reçues via une interface de charge. Ce signal de charge est démodulé par un démodulateur et les données sont alors transmises à l'unité de communication.

D'autres solutions voisines de celle décrite dans la demande de brevet NL 9000685 sont enseignées par les brevets US 5,111,240 au nom de NEC. Corp. et US 4,700,375 au nom de Motorola Inc. Toutes ces solutions ont comme avantage commun de permettre des échanges de données entre un objet portatif et un terminal de communication de données alors même que le ou les chargeurs alimentant l'objet portatif et lui permettant de fonctionner sont en cours de charge. Les utilisateurs de tels systèmes peuvent ainsi réaliser des gains de temps appréciables puisqu'ils ne sont plus contraints d'attendre que les accumulateurs de l'objet portatif soient rechargés pour pouvoir effectuer des transferts de données. Ces systèmes présentent cependant deux inconvénients majeurs. Le premier de ces inconvénients réside dans le fait que les échanges de données ne peuvent habituellement se faire que de manière unidirectionnelle, depuis le terminal de communication de données vers l'objet portatif, dans la mesure où ces systèmes sont agencés pour transmettre des données par modulation du signal de charge. Il peut également être envisagé de transmettre des données en sens inverse, mais dans ce cas il faut avoir recours à des dispositifs électroniques très complexes. L'autre inconvénient concerne l'utilisation du courant de charge pour la transmission des données. Cela signifie, en effet, que les accumulateurs qui alimentent l'objet portatif doivent être en cours de charge pour que la transmission des données puisse s'opérer. A supposer que les accumulateurs soient complètement rechargés au moment où l'on souhaite introduire des données dans l'objet portatif, cette opération va soumettre lesdits accumulateurs à un courant de surcharge dont les effets négatifs (échauffement, vieillissement prématuré des accumulateurs) sont bien connus.

La présente invention a pour but de remédier aux inconvénients de l'art antérieur susmentionnés ainsi qu'à d'autres encore en proposant un chargeur électrique permettant notamment un échange bidirectionnel des données entre un ordinateur et l'objet portatif à recharger.

A cet effet, la présente invention concerne un support pour un objet portatif électronique tel que, par exemple, une montre-bracelet, alimenté par au moins un accumulateur rechargeable, ce support étant caractérisé en ce qu'il comprend des premiers moyens permettant de recharger le ou les accumulateurs de l'objet portatif, et des seconds moyens qui permettent audit objet portatif d'échanger des informations de façon uni- ou bidirectionnelle avec une unité de traitement électronique distante alors même qu'il est susceptible d'être en cours de chargement.

Grâce à ces caractéristiques, la présente invention permet à un utilisateur, en même temps qu'il recharge les accumulateurs, par exemple d'une montre-bracelet, de faire entrer sa montre dans un mode dans lequel celle-ci est susceptible d'échanger des informations avec une unité électronique distante, typiquement un ordinateur personnel ou PC. L'utilisateur de la montre peut ainsi réaliser des gains de temps notables puisqu'il n'est plus obligé, comme préalable à une opération de transfert de données, de d'abord recharger les accumulateurs de la montre. Par conséquent, la charge des accumulateurs de la montre et le transfert des données peuvent être effectués de façon concomitante. A contrario, comme les moyens de charge des accumulateurs de la montre et les moyens permettant la gestion des transferts de données sont indépendants les uns des autres, la montre peut communiquer avec le PC même si elle n'est pas en charge, ce qui confère encore d'avantage de souplesse d'emploi au dispositif selon l'invention, et permet surtout de prolonger la durée de vie des accumulateurs, en ne les soumettant pas à des courants de charge inutiles qui ont pour seul effet de provoquer leur échauffement et donc d'accélérer leur vieillissement.

Le fait d'utiliser des moyens de transfert de données indépendants des moyens de charge présente un autre avantage intéressant. En effet, comme la gestion et le transfert des données ne se font pas par modulation du courant de charge comme tel était le cas dans l'art antérieur, ces données peuvent être échangées sans aucune restriction de façon uni- ou bidirectionnelle entre la montre et le PC.

Enfin, le fait d'intégrer les moyens de charge des accumulateurs de la montre et l'interface de communication entre cette dernière et un PC dans un seul élément permet de ne pas multiplier inutilement les accessoires qui accompagnent la montre lors de sa vente et de limiter les risques de perdre l'un ou l'autre de ces objets.

Selon une caractéristique complémentaire de l'invention, les moyens qui permettent de recharger le ou les accumulateurs alimentant l'objet portatif sont du type inductif, tandis que la communication entre ledit objet portatif et le PC se fait via une liaison infrarouge. La charge et le transfert de données se font donc sans contact, ce qui permet de procurer un objet portatif tel que, en particulier, une montre-bracelet, dépourvu de tout contact ohmique. Une telle disposition s'avère particulièrement avantageuse dans la mesure où les inconvénients des contacts ohmiques sont bien connus, nuisant notamment considérablement à l'étanchéité des objets portables qu'ils équipent, et pouvant très facilement être endommagés, par exemple suite à une chute de l'objet portable, en raison de leur grande fragilité.

D'autres caractéristiques et avantages de la présente invention ressortiront plus clairement de la description détaillée qui suit d'un exemple de réalisation du chargeur selon l'invention, cet exemple étant donné à titre purement illustratif et non limitatif seulement, en liaison avec les dessins annexés dans lesquels :
- la figure 1 est une vue en perspective du chargeur conforme à la présente invention, la montre étant fixée autour de ce chargeur;
- la figure 2 est une vue analogue à celle de la figure 1, la montre-bracelet ayant été retirée du chargeur et reposant à côté de celui-ci;
- la figure 3 est une vue de face du chargeur de la figure 1, et
- la figure 4 est une vue de dessous du chargeur de la figure 1.

La présente invention procède de l'idée générale inventive consistant à procurer un dispositif permettant à un utilisateur de charger les accumulateurs d'un objet portatif tel que, par exemple, une montre-bracelet, en même temps que l'objet portatif peut échanger des données avec une unité de traitement électronique distante. L'utilisateur de la montre peut ainsi réaliser des gains de temps appréciables puisqu'il n'est plus obligé d'attendre que les accumulateurs de sa montre soient rechargés pour faire entre celle-ci dans un mode de transfert des données. Par ailleurs, comme la gestion et le transfert des données ne s'effectuent pas par modification d'un paramètre du courant de charge, ces données peuvent être échangées de façon uni- ou bidirectionnelle au choix, ce qui confère au chargeur selon l'invention une plus grande souplesse d'utilisation encore.

La présente invention va être décrite en liaison avec une pièce d'horlogerie du type montre-bracelet. Il va toutefois de soi que la présente invention peut, moyennant des adaptations mineures qui sont à la portée de l'homme du métier ordinaire, s'appliquer à tout autre type d'objet portatif tel que, en particulier, un téléphone portable ou sans fil.

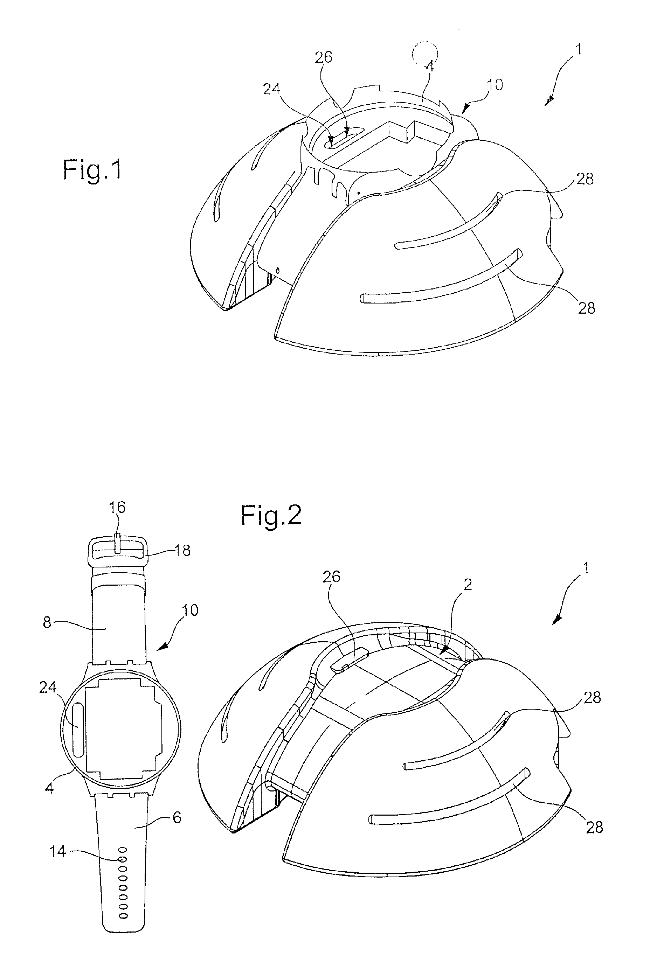

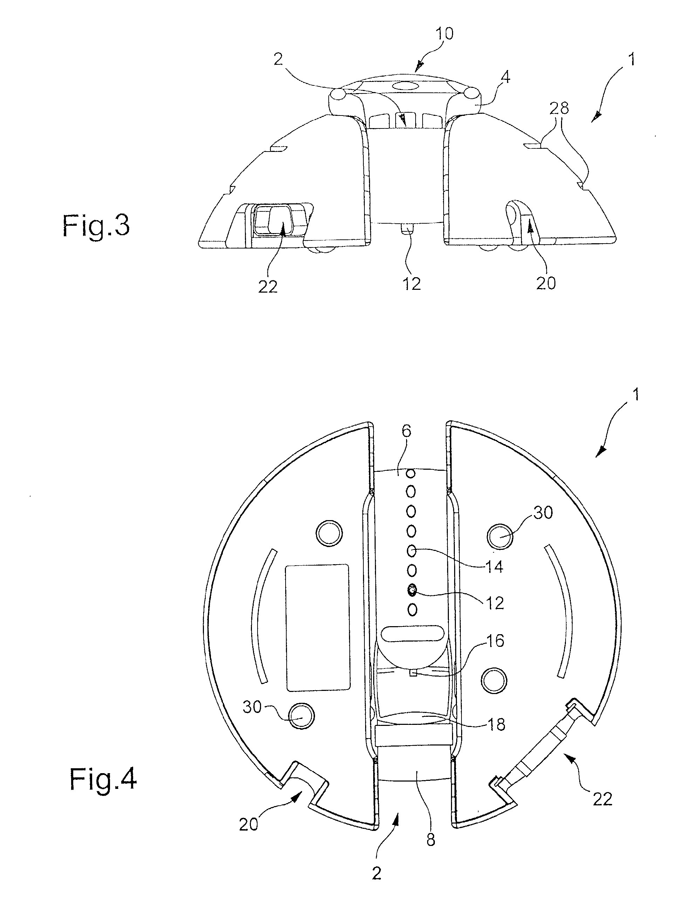

Le module de chargement conforme à la présente invention est représenté en perspective à la figure 1. Désigné dans son ensemble par la référence numérique générale 1, le module de chargement présente une large rainure 2 dont les contours épousent le profil de la boîte 4 et des deux brins 6 et 8 du bracelet d'une montre 10. Pour assurer un maintien fiable de la montre 10 sur le module de chargement 1, les deux brins 6 et 8 du bracelet sont recourbés et glissés sous ledit module 1 où un téton 12 en saillie de la rainure 2 pénètre dans l'une des perforations 14 pratiquées dans le brin 6 et prévues pour recevoir, lorsque l'utilisateur porte sa montre 10 au poignet, l'ardillon 16 qui est porté par l'autre brin 8 du bracelet de la montre 10. On voit sur la figure 4 que le brin 6 dans lequel sont pratiquées les perforations 14 vient recouvrir, au moins partiellement, par son extrémité libre la boucle de fermeture 18 du bracelet de la montre 10, assurant ainsi l'immobilisation de l'autre brin 8.

On s'intéresse ici aux montres-bracelets du type multifonction, c'est-à-dire à des montres qui permettent, non seulement d'accéder à diverses informations horaires, mais également, et surtout, à une multiplicité d'applications du type informatique qui peuvent, selon les cas, être stockées soit directement dans la montre, soit dans un ordinateur personnel, ou bien encore être accessibles via Internet. Outre le grand nombre de tâches qu'elles sont capables d'effectuer, ces montres se distinguent également par leur forte consommation en énergie due au fait que les échanges de données avec l'unité de traitement électronique distante se font sans contact et sans fil. Ne pouvant être rechargées directement via le réseau de distribution électrique, les réserves en énergie de telles montres s'épuisent rapidement. C'est la raison pour laquelle, aux piles jetables dont les capacités de stockage en énergie sont limitées, on préfère habituellement les accumulateurs qui peuvent être périodiquement rechargés à l'aide de chargeurs prévus spécialement à cet effet.

Le module de charge 1 selon l'invention est destiné à des montres-bracelets du type décrit ci-dessus. C'est pourquoi, conformément à la présente invention, il comprend des premiers moyens permettant de recharger le ou les accumulateurs de la montre-bracelet 10, et des seconds moyens qui permettent à ladite montre 10 d'échanger des informations de façon uni- ou bidirectionnelle avec une unité de traitement électronique distante telle que, en particulier, un PC.

Les moyens permettant de recharger le ou les accumulateurs alimentant la montre-bracelet 10 et lui permettant de fonctionner sont préférentiellement, mais non limitativement, du type inductif. A cet effet, le module de charge 1 comprend une première bobine constituant le primaire du transformateur, tandis qu'une seconde bobine constituant le secondaire dudit transformateur est placée dans le circuit de charge des accumulateurs de la montre 10.

D'autre part, la montre 10 peut communiquer avec un PC, par exemple via une liaison infrarouge. La montre 10 comprend alors une diode électroluminescente destinée à transmettre les informations contenues dans ladite montre 10 par émission de signaux lumineux. Ces signaux lumineux vont être détectés par un phototransistor disposé en regard de la diode émettrice dans le module de charge 1. Sous l'effet de la lumière incidente, le phototransistor va produire un signal électrique qui va, le cas échéant, être amplifié, puis appliqué aux bornes d'entrée d'un comparateur qui déterminera si le signal reçu correspond à un niveau logique haut ou bas. Après amplification et comparaison, le signal électrique produit par le phototransistor est classiquement converti par un circuit électronique adapté (non représenté) monté à l'intérieur du module 1 en seuils de tension 0/+5 volts qui vont être appliqués à un circuit d'interface également intégré dans le module 1 et qui va, à son tour, transformer les signaux 0/+5 volts en niveaux de tension -12 ou +12 volts qui peuvent directement être exploités par le PC.

Inversement, le PC peut également transmettre des informations en direction de la montre-bracelet 10. A cet effet, le module 1 comprend également une diode électroluminescente disposée en regard d'un phototransistor qui est, quant à lui, monté dans la boîte 4 de la montre 10. Les signaux logiques -12/+12 volts transmis au module 1 par le PC sont convertis en niveaux de tension 0/+5 volts par le circuit électronique renfermé dans le module 1 et vont venir commander l'allumage ou l'extinction de la diode dudit module 1. Sous l'effet de l'éclairement, le phototransistor disposé dans la montre 10 va produire un signal électrique qui va pouvoir être exploité par les circuits logiques de ladite montre 10.

Comme on l'aura compris de ce qui précède, la charge du ou des accumulateurs qui alimentent la montre-bracelet 10 et l'échange de données entre cette même montre 10 et un PC se font sans contact. Cette disposition de l'invention permet de procurer une montre 10 dépourvue de tout contact ohmique, ce qui s'avère particulièrement avantageux, tant les inconvénients des contacts ohmiques (étanchéité médiocre, risques de pénétration d'eau, de poussières, d'humidité dans la boîte de la montre, fragilité en cas de choc lorsque l'objet portable tombe par exemple au sol) sont nombreux.

La charge des accumulateurs de la montre 10 et l'échange de données entre cette même montre 10 et une unité de traitement électronique distante telle que, typiquement, un ordinateur personnel ou PC, peuvent donc être effectués simultanément, ce qui permet à l'utilisateur de réaliser des gains de temps appréciables puisqu'il n'est plus obligé, comme préalable à une opération de transfert de données, de d'abord recharger les accumulateurs de sa montre. Inversement, la charge des accumulateurs et l'échange de données sont deux opérations qui peuvent être effectuées indépendamment l'une de l'autre, ce qui confère encore une plus grande souplesse d'utilisation au chargeur 1 selon l'invention, et permet surtout de ne pas prolonger la charge des accumulateurs au-delà de leur état de charge maximal, afin de ne pas provoquer d'échauffement excessif qui pourrait accélérer le vieillissement de ces accumulateurs. Enfin, comme le transfert des données ne se fait pas par modification d'un paramètre du courant de charge, ce transfert peut s'opérer au choix de façon uni- ou bidirectionnelle.

Pour la charge des accumulateurs de la montre 10, le module de chargement 1 est muni d'un connecteur 20 pour le branchement d'un adaptateur secteur (non représenté) qui permet de relier ledit module 1 au réseau de distribution d'électricité. D'autre part, le module 1 comprend un second connecteur 22 pour le branchement d'un câble série (également non représenté) qui permet de relier ledit module 1, et donc la montre 10 qui lui est associée, à un PC.

Les diodes et les phototransistors dont il a été question ci-dessus sont habituellement montés par paire sur une même plaquette de circuit imprimé. Comme on peut le voir sur les figures, un trou oblong 24 destiné à recevoir une telle plaquette de circuit imprimé portant une diode et un phototransistor est ménagé dans le fond de la boîte 4 de la montre 10. Le trou oblong 24 vient en regard d'un bossage 26 prévu sur le module de chargement 1 et dans lequel sont également intégrés une diode et un phototransistor. Avantageusement, la bobine constituant le primaire du transformateur de charge est également disposée dans le bossage 26, tandis que la bobine du secondaire est située au voisinage du trou 24. Bien entendu, les diodes et les phototransistors peuvent être disposés en un autre endroit, pour peu que l'ensemble diode/phototransistor de la montre 10 soit en regard de l'ensemble diode/phototransistor correspondant du module de charge 1 lorsque ladite montre 10 est placée sur ledit module 1.

Enfin, le module 1 comprend des ouïes 28 pour le refroidissement de l'enroulement primaire du transformateur permettant de recharger les accumulateurs de la montre 12. D'autre part, le module 1 est muni, sur sa surface inférieure, de plusieurs plots 30 réalisés en un matériau antidérapant lui permettant de ne pas glisser lorsqu'il est posé sur une surface plane.

Il va de soi que la présente invention n'est pas limitée au mode de réalisation qui vient d'être décrit, et que diverses modifications et variantes simples peuvent être envisagées par l'homme du métier sans sortir du cadre de la présente invention.

## Revendications

1. Support pour un objet portatif électronique tel que, par exemple, une montre-bracelet (10), alimenté par au moins un accumulateur rechargeable et susceptible de communiquer avec une unité de traitement électronique distante, ce support (1) étant **caractérisé en ce qu'**il comprend des premiers moyens permettant de recharger le ou les accumulateurs de l'objet portatif, et des seconds moyens qui permettent audit objet portatif d'échanger des informations de façon uni- ou bidirectionnelle avec une unité de traitement électronique distante alors même que ledit objet portatif est susceptible d'être en cours de chargement.

2. Support selon la revendication 1, **caractérisé en ce que** les moyens qui permettent de recharger le ou les accumulateurs de la montre sont du type inductif, tandis que la communication entre ledit objet portatif et l'unité de traitement électronique distante s'opère via une liaison infrarouge.

3. Support selon la revendication 2, **caractérisé en ce que** les moyens pour recharger le ou les accumulateurs de l'objet portatif comprennent un enroulement constituant le primaire d'un transformateur, tandis qu'un second enroulement constituant le secondaire du transformateur est placé dans le circuit de charge des accumulateurs de l'objet portatif, et **en ce que** les moyens de communication entre l'objet portatif et l'unité de traitement électronique distante comprennent une première et une seconde paires de diodes et de phototransistors disposées respectivement dans ledit objet portatif et ledit support.

4. Support selon la revendication 3, **caractérisé en ce qu'**une paire de composants formée par une diode et un phototransistor sont disposés dans une ouverture (24) ménagée dans le fond de l'objet portatif, et **en ce que** l'autre paire de composants est intégrée dans un bossage (26) du support (1) complémentaire de l'ouverture (24), une bobine constituant le primaire d'un transformateur de charge étant également disposée dans le bossage (26).

5. Support selon l'une quelconque des revendications 1 à 4, **caractérisé en ce qu'**il comprend un premier connecteur (20) pour le branchement d'un adaptateur secteur, et un second connecteur (22) pour le branchement d'un câble série permettant de relier ledit support (1), et donc l'objet portatif, à l'unité de traitement électronique distante.

6. Support selon l'une quelconque des revendications 1 à 5, **caractérisé en ce qu'**il comprend un téton (12) destiné à pénétrer dans l'une des perforations (14) pratiquées dans un des brins (6) d'un bracelet permettant de porter l'objet portatif au poignet.

7. Support selon l'une quelconque des revendications 1 à 6, **caractérisé en ce qu'**il comprend des ouïes d'aération (28) et **en ce qu'**il est muni, sur sa surface inférieure, de plusieurs plots (30) réalisés en un matériau antidérapant lui permettant de ne pas glisser lorsqu'il est posé sur une surface plane.
